# EUROPEAN PATENT APPLICATION

(11) **EP 0 702 325 A2**
(43) Date of publication of application: **20.03.1996**
(21) Application number: 95500127.6
(22) Date of filing: 18.09.1995
(51) Int. Cl.: G06K 19/04

(54) **Intelligent card useful in telephony and the like**

(30) Priority: 19.09.1994 ES 9401967
(71) Applicant: FABRICA NACIONAL DE MONEDA Y TIMBRE, E-28009 Madrid (ES)
(72) Inventor: Fernandez Perez, Manuel, ES-28009 Madrid (ES); Pisonero Montes, Fernando, ES-28009 Madrid (ES); Montez Sanchez, Carlos, ES-28009 Madrid (ES)
(74) Representative: Carpintero Lopez, Francisco

(57) **Abstract**

Two types of subscriber identification modules (SIM) exist in the field of mobile telephony, one type conforming to the conventional ISO 7810/13/16 format and the other type to the PrENV 1375-2 European pre-standard format. In particular, the latter type uses a small identification module on its own, and the first type uses such module integrally with a larger plastic card. The intelligent card of the invention is comprised by the combination of a module (1) conforming to the European pre-standard and a laminar sheet (2) having a window (3) capable of housing therein said module (1) snugly to turn into a chip card conforming to ISO standards, being particular in that tonguing and grooving means (4-5) are established between the edges of the module (1) and the edges of the window (3) allowing said parts to be easily coupled to and uncoupled from each other, to be used jointly or separately, as required at each particular instance.

## Description

### OBJECT OF THE INVENTION

The present invention relates to an intelligent card which has been particularly devised to be used in the field of mobile telephony, but which may similarly be used in any other field where a similar performance is required, the intelligent card aforesaid being easily and swiftly manipulated to make it conform to two different formats useful in particular in telephones conforming to ISO 7810/13/16 standards or PrENV 1375-2 European pre-standard.

This is achieved by fragmenting the card into two parts, namely a minimodule as accepted by PrENV 1375-2 European pre-standard and a card proper, wherein said minimodule is integrated, and which in turn conforms to ISO 7810/13/16 standards.

### BACKGROUND OF THE INVENTION

It is well-known that the manufacture of chip cards uses a technique that is known to and employed by manifold companies worldwide.

The manufacture of such cards first requires the assembling or inlaying of the module on or in a plastic part, by module meaning chip, wafer, wiring, etc. as a whole, thereby for said module to be fully integrated in the plastic card to make up a single-part assembly.

With the emergence in Europe of the GSM mobile telephony system two possible subscriber identification modules (SIM) were defined, one type being similar in format to conventional cards, as the card aforesaid, and another type being smaller as described in PrENV 1375-2 European pre-standard. Upon their insertion in mobile telephones, these SIMs identify the telephone as belonging to a telephone subscriber who will be charged for all calls made and may in turn receive calls from others.

Considering that the market is free to manufacture and sell mobile telephones, technical solutions have been developed for telephones to work with only one of the SIM possibilities aforesaid. In other words, every telephone set is designed to have specific SIM housing and either provides a slot in which the chip card SIM is inserted, or provides a housing to fit the minimodule SIM in accordance with PrENV 1375-2 European pre-standard.

Cards have been developed initially as a single part yet allowing the minimodule to be severed from the rest of the plastic part holding it to be used in a suitable telephone or reader, but after severing the module cannot however be reused in telephones or readers of the kind that take cards.

Furthermore, in recording user information, SIM issuers generally have equipment that works only with a chip card, which is why minimodules should conveniently have a frame with which they can, at least eventually and in particular whilst recording takes place, turn into a chip card.

### DESCRIPTION OF THE INVENTION

The intelligent card subject of the invention fully solves the above problems and to do so the card is made as two independent parts that may be easily and swiftly coupled to and uncoupled from each other by merely pressing one piece against the other slightly.

More specifically and in order to achieve the above, one of the plastic parts aforesaid holds the module, viz. chip, wafer, wiring, etc., in particular the electronic identification module, whereas the other part comprises a simple frame for the first part, to turn it into a chip card of conventional format, being especially particular in that these parts have tonguing and grooving means, namely complementary tongues and grooves that allow them to be coupled to and uncoupled from each other by simple pressure.

The minimodule, viz. the electronic identification module, can thus be used on its own in sets made for such format, or the minimodule may otherwise be coupled to the complementary frame and the chip card assembly can be used in all other sets, viz. sets having a different format.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

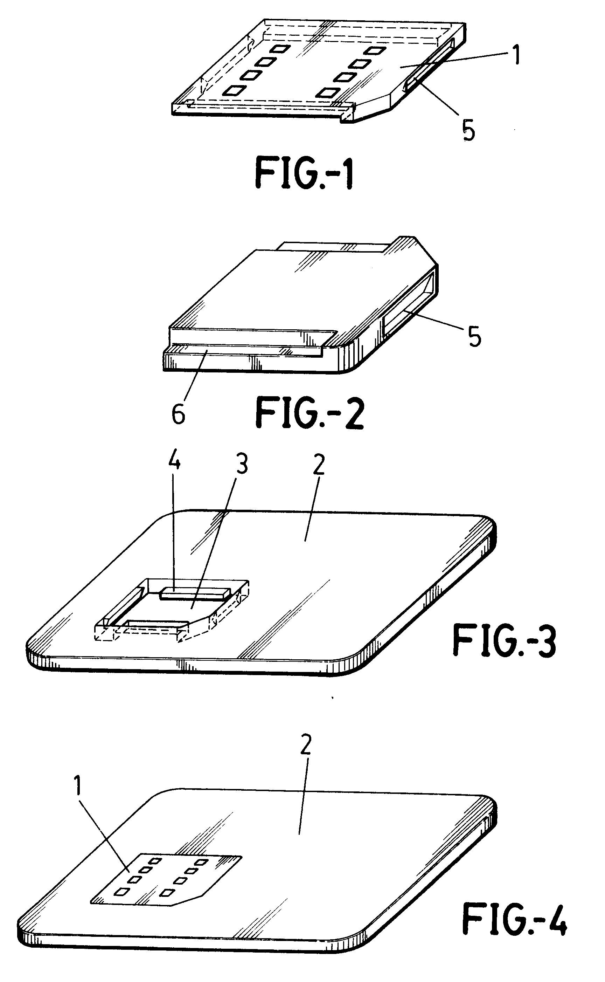

Figure 1.- Is a schematic perspective view of the minimodule or electronic identification module used in the intelligent card subject of this invention, which may be used on its own in sets having a format conforming to PrENV 1375-2 European pre-standard.

Figure 2.- Is a perspective of the opposite face of the same minimodule.

Figure 3.- Is another schematic perspective view of the complementary frame for the minimodule of the above figures, which comprises a plastic card.

Figure 4.- Finally shows the two duly assembled elements of the above figures, to make up a chip card of conventional format useful in sets conforming to ISO 7810/13/16 standards.

### PREFERRED EMBODIMENT OF THE INVENTION

In the figures, the intelligent card subject hereof is structured as a functional combination of a minimodule (1) and a laminar frame (2), said minimodule containing chip, wafers and other elements typical of an electronic identifying module, said minimodule (1) being formally and dimensionally suitable to be fitted in the housing provided by subscriber identification modules conforming to the European pre-standard repeatedly mentioned above, whereas the laminar frame (2) in turn has a window (3) wherein the minimodule (1) is to fit snugly, and located so as to make up, with the minimodule, a chip card that may be used in subscriber identification modules that conform to ISO standards, i.e. the format of this unit, as shown in figure 4, conforms to such standards.

To complete the construction aforesaid and in accordance with the essence of the invention, the window or housing (3) in the laminar frame (2) has tongues (4) on its edges complementing grooves (5) lying on the edges of the minimodule (1), although they can be otherwise arranged, i.e. the tongues can lie on the minimodule (1) and the grooves on the edges of the window (3) of the laminar sheet (2) without this affecting the essence of the invention, albeit resulting in any event in a pressure tonguing and grooving between both elements, thereby ensuring a perfect stability of the minimodule within the context of the intelligent card, as positioned in figure 4, to be used in subscriber identification modules having a format conforming to ISO standards, and in this position the module (1) can be easily detached to be used on its own in subscriber identification modules having a format conforming to PrENV 1375-2 European pre-standard.

Both parts (1) and (2) can be made of a plastic material and injection moulded, and the tongues (4) and grooves (5) aforesaid can have complementary V-shaped profiles, thereby, together with a complementary stepped recess (6) lying on one of its edges, to ensure a better rigidity and stability upon reading, and a lower risk of the minimodule (1) becoming detached by chance.

Since the minimodule (1) is the most valuable element of the intelligent card as a whole, the minimodule can purposely be made of a slightly stronger material than the laminar frame (2) in order that if there should be an accident, any damages ensuing will be for the weaker part, namely the cheaper and more easily replaceable part.

## Claims

**1.-** An intelligent card useful in telephony and thelike, essentially characterised by constituting the functional combination of two removably-mounted and preferably plastic independent parts, one part comprising the electronic identification module (1) and affording a format conforming to PrENV 1375-2 European pre-standard, and the other part comprising a laminar frame (2) having a window (3) capable of housing part (1) snugly, thereby together making up a chip card having a format in turn conforming to ISO 7810/13/16 standards, all in order that the electronic identification module (1) may be used on its own in subscriber identification modules conforming to the European pre-standard, whereas both parts (1) and (2) together make up a card that may be used in all other subscriber identification modules conforming to ISO standards.

**2.-** An intelligent card useful in telephony and the like, as in claim 1, characterised because part (1) comprising the electronic identification module has tongues or grooves (5) on its edges complementing grooves or tongues (4) respectively provided on the edges of the window (3) of the laminar frame (2), to define a stable coupling between both parts (1) and (2), easily removable by pressing inversely upon both parts.

**3.-** An intelligent card useful in telephony and the like, as in the above claims, characterised because parts (1) and (2) making it up are made of plastic materials of different strengths in order for one part, namely the part that is more costly to replace, to prevail over the other.
